Europäisches Patentamt

European Patent Office

Office européen des brevets

(19)

(11) Publication number: **0 051 858**
A2

## EUROPEAN PATENT APPLICATION

(21) Application number: 81109516.5

(51) Int. Cl.³: **H 02 K 15/10**

(22) Date of filing: **05.11.81**

(30) Priority: **06.11.80 JP 156883/80**

(71) Applicant: **Matsushita Electric Industrial Co., Ltd., 1006, Oaza Kadoma, Kadoma-shi Osaka-fu, 571 (JP)**

(43) Date of publication of application: **19.05.82 Bulletin 82/20**

(72) Inventor: **Hamane, Tokuhito, 16-19, Nagao Tanimachi 3-chome, Hirakata-shi Osaka-fu 573-01 (JP)**
Inventor: **Tasai, Masaaki, 16-1, Miyamae-cho Kadoma-shi, Osaka-fu 571 (JP)**

(84) Designated Contracting States: **DE GB**

(74) Representative: **Eisenführ & Speiser, Martinistrasse 24, D-2800 Bremen 1 (DE)**

(54) Insulating material insertion apparatus.

(57) An insulating material insertion apparatus used, for example, for inserting an insulating material into slots of a stator core of an electrical machine, together with a stator winding machine. The apparatus includes a mechanism for feeding out the insulating material in a long length, which is provided with two rollers for holding the insulating material between them, a motor for driving at least one of the rollers, and a control unit for variably controlling the feeding time and set amount of feeding of the insulating material.

# INSULATING MATERIAL INSERTION APPARATUS

The present invention generally relates to an apparatus for manufacturing, for example, stators of electric motors and the like, and more particularly, to an insulating material insertion apparatus in which a mechanism for inserting insulating material into slots of stator cores has been simplified.

Generally, the stator of an electrical machine is so constructed that coils 4 and insulating pieces 5 are inserted into a plurality of grooves or slots 3 formed in an inner periphery of a stator core 1 and suitably insulated by insulating paper 2 as shown in Figs. 1 and 2, with an appearance in the finished state as in Fig. 3, in which a main coil 6 and auxiliary coils 7 further including one or several kinds of speed regulation coils depending on necessity, are provided.

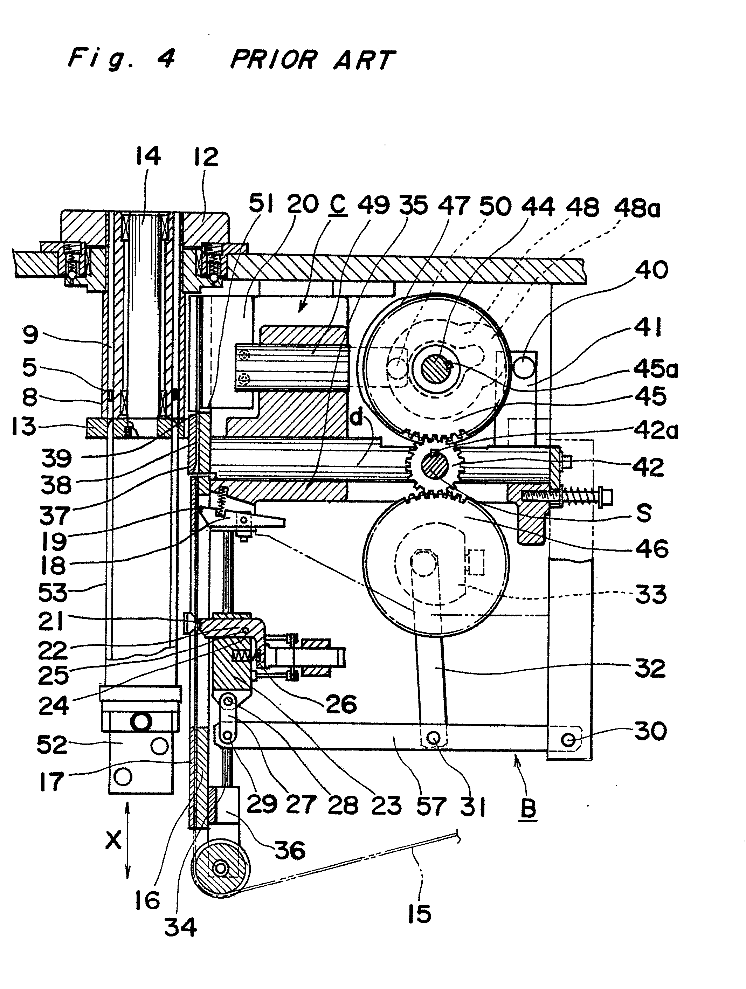

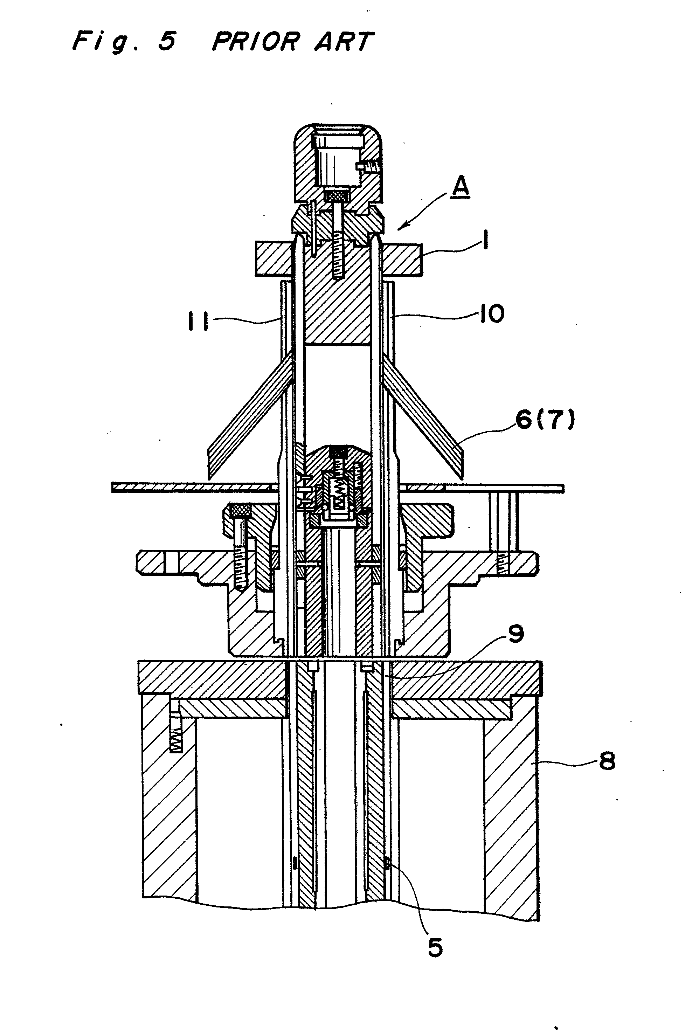

Referring to Figs. 4 and 5, the construction and function of a conventional insulating material insertion apparatus will subsequently be described, which generally includes an insulating material feeding device B and a cutting and shaping device C for an insulating material 15 in a manner as described hereinbelow.

In the known insulating material insertion apparatus, there is provided, at the upper left side in Fig. 4, an insulating material guide housing 8, in the outer peripheral surface of which, a plurality of equally spaced guide grooves 9 are axially formed. The guide grooves 9 are positionally aligned with insulating material guide slots 10 provided in a coil insertion jig A (Fig. 5) by an insulating material guide 11 in such a manner that, for example, when sixteen insulating material guide slots 10 are formed, the number of the insulating material guide grooves 9 in the guide housing 8 is also arranged to be sixteen for the axial alignment therebetween. Meanwhile, the guide housing 8 is rotatably held between a stationary plate 12 and a support plate 13 for intermittent rotation around a hollow shaft 14 by an intermittent rotating mechanism (not shown).

Subsequently, the insulating material feeding device B will be described hereinbelow.

The narrow and long belt-like insulating material 15 wound into a roll form is fed, by a groove-shaped guide 16 provided at the lower left portion in Fig. 4, into the cutting and shaping device C (to be described later) so as to be formed into the insulating pieces 5 referred to earlier. The groove-shaped guide 16 is provided with a contact plate 17 for correctly fitting the insulating material 15 into said groove 16. Along a passage of the insulating material 15 in the upward movement thereof, there is pivotally provided a claw 18 which has, at its forward end portion adjacent to the passage of the insulating material 15, a toothed portion 19 to be brought into contact with the insulating material 15. The claw 18 is so provided as to allow the insulating material 15 to advance toward a shaping and push-in punch 20 provided along said passage above the claw 18, but to prevent the material 15 to retreat in the opposite direction. For feeding a predetermined length of the insulating material into the shaping and push-in punch 20, there is provided, in a position above the groove-shaped guide 16, another feeding claw 22 having teeth 21, which is pivotally connected within a slot 24 formed in a feeding block 23 by a pin 25 as shown in Fig. 4. Inside the feeding block 23, a spring 26 is provided for urging the feeding claw 22 in a direction to contact the insulating material 15. As a result that the feeding claw 22 is thus urged by the spring 26, the teeth 21 of the feeding claw 22 is brought into contact with the insulating material 15, and when the claw 22 is moved toward the shaping and push-in punch 20 by a suitable means (not shown), the insulating material 15 is advanced. Although the feeding claw 22 is rotated to a certain extent about the pin 25 in the counterclockwise direction when the feeding claw 22 is moved in the direction to be spaced from the shaping and push-in punch 20, the pressure applied to said insulating material 15 by the teeth 21 in the above case is not so large. Meanwhile, in the above case, driving force in the downward direction is also applied to the insulating material 15, but the downward movement of the insulating material 15 is prevented by the claw 18.

In Fig. 4, for periodical upward and downward pivotal movements of the feeding claw 22, a link member 27 is pivotally connected, at its one end, to the feeding block 23 by a pin 28, and at its other end, to a corresponding one end of a lever 57 by a pin 29, with the other end of the lever 57 is also pivotally connected to a frame of the apparatus by a pin 30. At the intermediate portion of the lever 57, one end of another link member 32 is pivotally connected by a pin 31, while the other end of the link member 32 is eccentrically coupled to a rotary wheel 33 rotatably provided at the intermediate portion of the apparatus housing. Accordingly, upon rotation of the rotary wheel 33, the link member 32 is subjected to alternate upward and downward movements, and consequently, the feeding block 23 and the feeding claw 22 are spaced from or approach the shaping and push-in punch 20. For maintaining the vertical reciprocating movements of the feeding block 23 and the feeding claw 22 in a proper relation with respect to the groove-shaped guide 16 and the insulating material 15, a guide shaft 34 extends in a parallel relation with respect to the groove-shaped guide 16. The upper end of the guide shaft 34 is secured to an apparatus casing 35, while the lower end thereof extends through an opening (not shown) formed in the feeding block 23 so as to be fixed to an apparatus block 36. Upon vertical reciprocating movements of the feeding block 23 by the lever 57, the path of movement of the feeding block 23 is maintained in the parallel relation with respect to the groove-shaped guide 16 by the guide shaft 34, and thus, the insulating material 15 is properly fed out at all times.

Subsequently, the construction of the cutting and shaping device C for the insulating material 15 will be described hereinbelow.

Still referring to Fig. 4, the cutting and shaping device C includes a cutting block 37 provided above the claw 18 along the passage of the insulating material 15 and having a guide portion 38 and a cutting edge 39 for the material 15 at its forward end portion. At the right upper portion in Fig. 4, there is provided a roller 40 fixed to a support plate 41 secured to a shaft d which is slidably guided in the apparatus casing 35. A gear 42 secured to an output shaft S of a motor (not shown) by a key 42a is in mesh with a lower gear 46 secured to the rotary wheel 33, and also with an upper gear 45 secured to a shaft 44 by a key 45a for rotating said gears 45 and 46. Meanwhile, a plate cam 47 is secured to the gear 45, and upon rotation of the gear 45, the plate cam 47 is also rotated in the same direction to impart lateral reciprocating movements to the shaft d through the support plate 41 to which the roller 40 is fixed. A groove cam 48 is fixed to the same shaft 44 as for the gear 45, while the shaping and push-in punch 20 is secured to a shaft 49 in which a roller 50 is incorporated for engagement with the groove cam 48. Upon rotation of the groove cam 48, when a projecting portion 48a of the cam 48 contacts the roller 50, the shaft 49 is shifted toward the left in Fig. 4.

By the above arrangement, upon operation of the apparatus, the insulating material 15 is fed by a predetermined length by the feeding claw 22 through the upward movement of said insulating material, and thereafter, the shaping and push-in punch 20 is moved toward the left side in Fig. 4 as the groove cam 48 rotates. At the lower portion of the shaping and push-in punch 20, there is provided another cutting edge 51, and by shifting the cutting block 37 toward the right, while moving the shaping and push-in punch 20 leftward in Fig. 4, the insulating material 15 is cut off between the cutting edge 39 of the cutting block 37 and the cutting edge 51 of the punch 20 to form the insulating piece 5 described earlier. After the above cutting off, the shaping and push-in punch 20 further moves leftward to effect shaping and to insert the insulating piece into the guide groove 9 of the guide housing 8, and thereafter, the shaping and push-in punch 20 is returned back to the original position. In the manner as described above, the insulating piece 5 is inserted into one guide groove 9, and then, the guide housing 8 is rotated by a predetermined degree by the intermittent rotation driving source (not shown) for successively inserting the insulating pieces 5 into other guide grooves 9.

Subsequently, functions for inserting the insulating pieces 5 within the guide houding 8, into the coil and insulating material insertion jig A will be described hereinbelow.

At the lower portion of the guide housing 8, there is provided an insulating material depressing member 53 supported, at its lower end, by a support plate 52, which is driven by a motor, etc. (not shown) for reciprocation in the directions indicated by the arrow X. Firstly, the coil and insulating material insertion jig A (Fig. 5) is regulated for position, and the insulating material guide slots 10 thereof are axially aligned to correspond to the respective insulating material guide grooves 9 of the insulating material insertion apparatus. Subsequently, upon rising of the insulating material depressing member 53 by driving means such as a hydraulic cylinder, motor or the like (not shown), the upper surface of the insulating material depressing member 53 is brought into contact with the under face of the insulating piece 5 to be moved upwardly, and thus, the insulating piece 5 is transferred into the coil and insulating material insertion jig A.

As is seen from the foregoing description, the conventional insulating material insertion apparatus, especially, the insulating material feeding device B thereof, has a very complicated construction, and in the setting of the feeding amount of the insulating material 15, only a slight difference in the amount of eccentricity of the link member 33 with respect to the rotary wheel 33 results in a large difference in the stroke of the feeding claw 22, and therefore, the amount of eccentricity of the link member 32 with respect to the rotary wheel 33 had to be altered through a trial and error procedure for determination by the actual measurements of the stroke. Meanwhile, even when the amount of eccentricity is known, it has been almost impossible to obtain a predetermined amount of eccentricity immediately after alteration of the amount of eccentricity, and thus, repeated corrections of the amount of eccentricity have been required.

0051858

Accordingly, an essential object of the present invention is to provide an insulating material insertion apparatus for inserting an insulating material, for example, into slots of stator cores of electric motors or the like, in which a mechanism for inserting the insulating material is simplified for efficient operation of the apparatus.

Another important object of the present invention is to provide an insulating material insertion apparatus of the above described type which is highly stable and reliable in functioning, and can be manufactured at low cost.

In accomplishing these and other objects, according to one preferred embodiment of the present invention, there is provided an insulating material insertion apparatus which comprises a feeding mechanism for intermittently feeding an insulating material to a predetermined position by a predetermined length, an insulating material housing for accommodating the insulating material fed to the predetermined position into a guide groove provided therearound, a push-in mechanism for pushing the insulating material into the insulating material housing after cutting and shaping of the insulating material into insulating pieces by cutting and shaping means, and an insulating material depressing member for inserting the insulating pieces contained in the insulating material housing into a coil and insulating material insertion jig. The feeding mechanism further includes a roller member contacting, at its peripheral face, the insulating material, a rotary member provided to confront said roller member for holding the insulating material between the rotary member and the roller member, drive means for driving the rotary member for rotation in correspondence to a set feeding amount of the insulating material, and a control unit for controlling motion of the drive means.

By the arrangement according to the present invention as described above, an improved insulating material insertion apparatus has been advantageously presented, with substantial elimination of disadvantages inherent in conventional arrangements of this kind.

These and other objects and features of the present invention will become apparent from the following description taken in conjunction with the preferred embodiment thereof with reference to the accompanying drawings, in which;

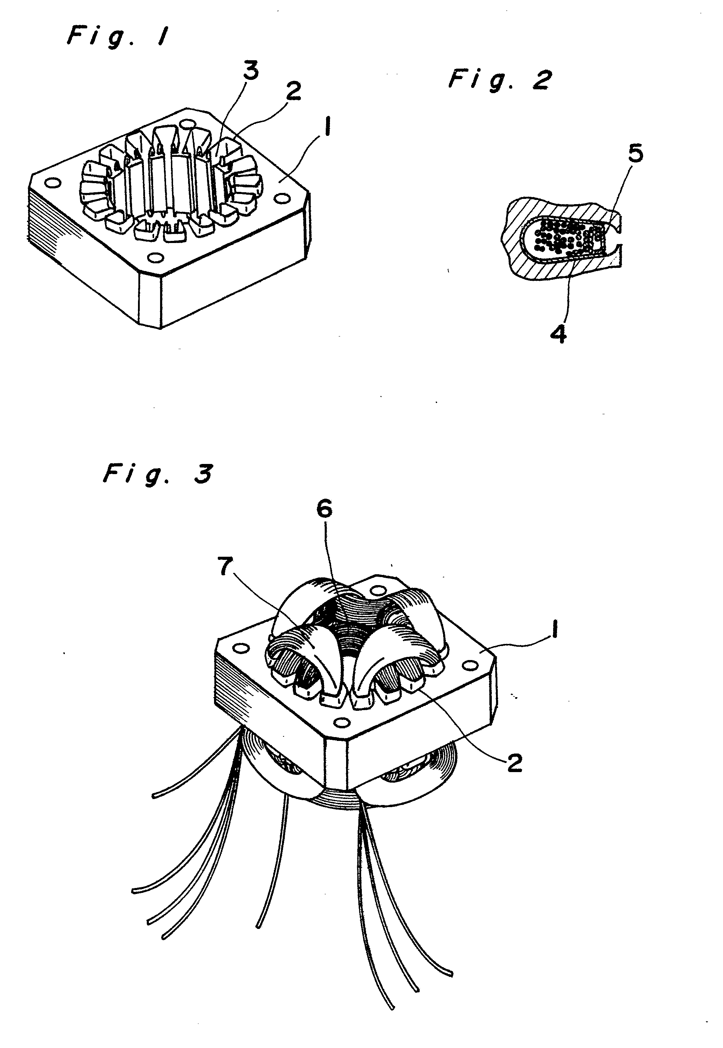

Fig. 1 is a perspective view of a stator core of an electrical machine to which the present invention may be applied (already referred to),

Fig. 2 is a fragmentary sectional view of one groove of the stator core in Fig. 1 in which a coil and an insulating piece are inserted (already referred to),

0051858

Fig. 3 is a perspective view of the stator core in Fig. 1 at a finished stage, in which the coils and insulating pieces are inserted (already referred to),

Fig. 4 is a side elevational view, partly in section, of a conventional insulating material insertion apparatus (already referred to),

Fig. 5 is a fragmentary side sectional view showing a positional relation between the coil and insulating material insertion jig and the conventional insulating material insertion apparatus (already referred to),

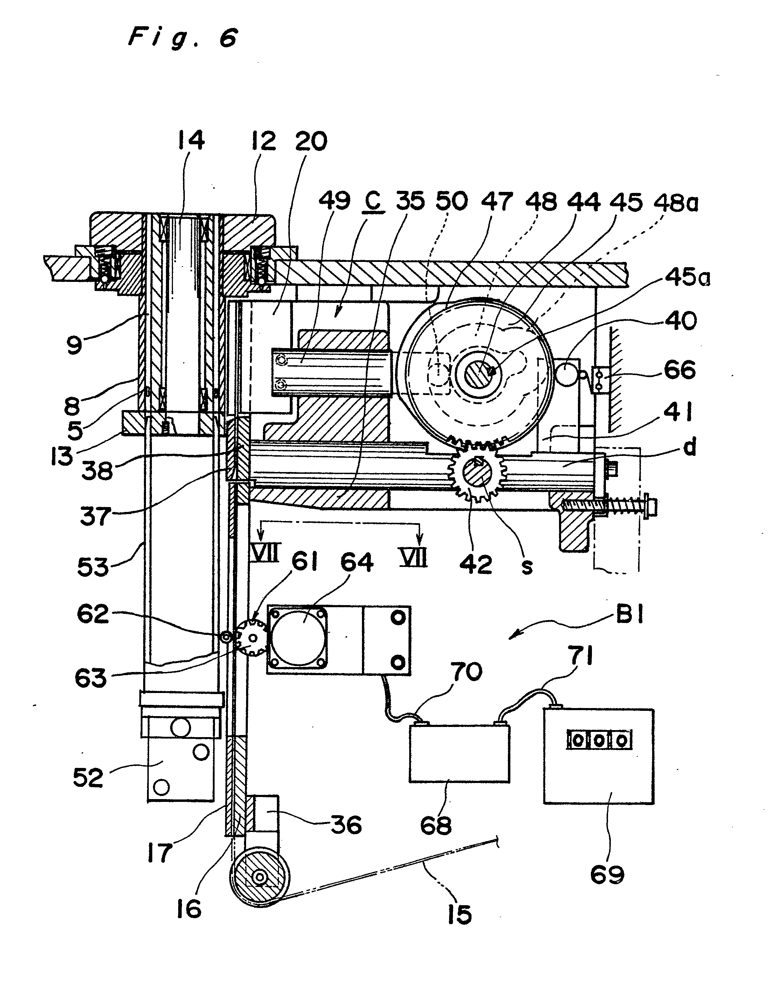

Fig. 6 is a side sectional view of an insulating material insertion apparatus according to one preferred embodiment of the present invention, and

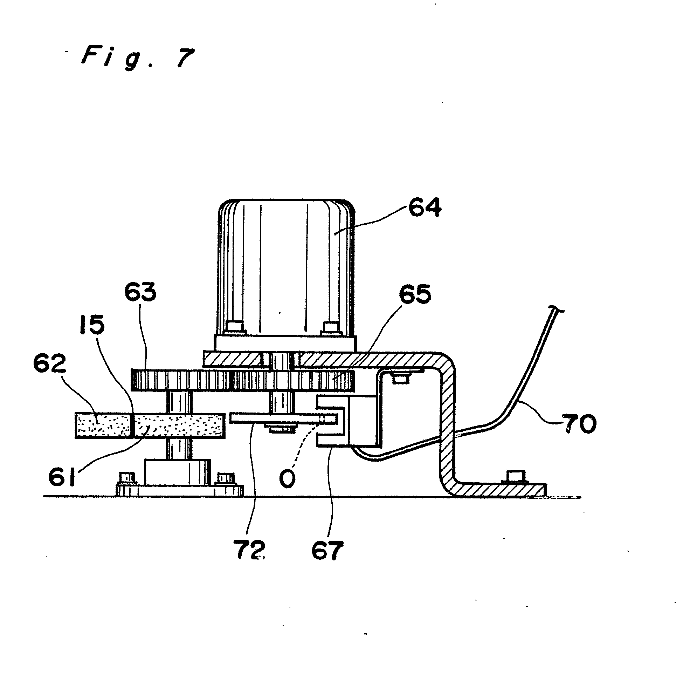

Fig. 7 is a side elevational view, showing on an enlarged scale, an essential portion of the apparatus of Fig. 6 as viewed in the direction of the arrow VII-VII in Fig. 6.

Before the description of the present invention proceeds, it is to be noted that like parts are designated by like reference numerals throughout several views of the accompanying drawings.

Referring now to Figs. 6 and 7, an improved insulating material insertion apparatus according to one preferred embodiment of the present invention will be described hereinbelow.

0051858

In the improved insulating material insertion apparatus of the present invention generally shown in Fig. 6, the insulating material feeding device B described as employed in the known apparatus of Fig. 4, and provided with the claw 18, feeding claw 22, feeding block 23, link member 27, lever member 57, link member 32, rotary wheel 33, and gear 46, etc. as described earlier is replaced by a simplified insulating material feeding device Bl which includes a guide roller 61, a feeding roller 62 which is coupled to a motor 64, an integrating counter or pulse counter 68, a counter 69 and a limit switch 66, etc. in a manner as described hereinbelow.

In Fig. 6, the guide roller 61 and the feeding roller 62 are provided along the path of the insulating material 15 so as to feed said insulating material held therebetween. A gear 63 is fixed on the same shaft as the guide roller 61, while the gear 63 is in mesh with a gear 65 fixed on the output shaft of a motor 64 which is capable of intermittent rotation as shown in Fig. 7. The motor 64 is arranged to be rotated by a degree corresponding to the predetermined length of the insulating material 15, only when it is ensured that the support plate 41 secured to the shaft d as described earlier with reference to Fig. 4 is located at the left side in Fig. 6, by the contact of said plate 41 with the limit switch 66 provided adjacent thereto as shown. For setting the rotational angle of the motor 64, a disc 72 formed with a slit or opening O is mounted on the same shaft as the motor 64 so as to add up pulses developed by a photocell 67 provided adjacent to the disc 72, by the integrating counter 68 which is coupled therewith through a lead wire 70 for setting the counter 69 connected to the integrating counter 68 through a lead wire 71, in proportion to the predetermined length of the insulating material. As the motor 64 rotates up to the set value of the counter 69, the rotation is transmitted to the guide roller 61 through the gears 65 and 63, and thus, the insulating material 15 held between the peripheral portions of the guide roller 61 and feeding roller 62 is fed by the predetermined amount.

Since other constructions and functions of the insulating material insertion apparatus B1 of Fig. 6 are generally the same as those of the conventional arrangement of Fig. 4, detailed description thereof is abbreviated here for brevity, with like parts being designated by like reference numerals.

As is clear from the foregoing description, according to the present invention, the conventional complicated mechanism for feeding the insulating material by the predetermined length may be replaced by a very simple mechanism, while the setting of length of the insulating material conventionally effected in the trial

0051858

and error procedure by the extremely delicate adjustment of screws, etc. has been much simplified, so that the feeding amount of the insulating material can be readily determined only by setting the number of pulses to values proportional to the set length of the insulating material.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

What is claimed is:

1. An insulating material insertion apparatus which comprises a feeding mechanism for intermittently feeding an insulating material to a predetermined position by a predetermined length, an insulating material housing for accommodating the insulating material fed to said predetermined position into a guide groove provided therearound, a push-in mechanism for pushing the insulating material into said insulating material housing after cutting and shaping of said insulating material into insulating pieces by cutting and shaping means, and an insulating material depressing member for inserting said insulating pieces contained in said insulating material housing into a coil and insulating material insertion jig, said feeding mechanism further including a roller member contacting, at its peripheral face, the insulating material, a rotary member provided to confront said roller member for holding the insulating material between said rotary member and said roller member, drive means for driving said rotary member for rotation in correspondence to a set feeding amount of the insulating material, and a control unit for controlling motion of said drive means.

2. An insulating material insertion apparatus as claimed in Claim 1, wherein said cutting and shaping means includes a cutting block having a cutting edge and reciprocatingly movable with respect to a feeding path of the insulating material and a shaping and push-in punch having a corresponding cutting edge and movable in a direction opposite to the movement of said cutting block so as to cut the insulating material into the insulating pieces between said cutting edge and said corresponding cutting edge.

3. An insulating material insertion apparatus as claimed in Claim 2, further including a limit switch which is arranged to be actuated only when said cutting edge of said cutting block is located at a predetermined position in one direction of said reciprocating movement so as to rotate said drive means capable of intermittent rotation by a degree corresponding to a predetermined length of the insulating material.

4. An insulating material insertion apparatus as claimed in Claim 3, wherein said drive means is an electric motor to be set, in its rotational angle for the intermittent rotation by said degree, by said control unit which includes photoelectric means for developing electrical pulses to detect rotation of said drive means, and an integrating counter for adding up said electrical pulses so as to set a counter in proportion to the predetermined length of the insulating material.

5. An insulating material insertion apparatus as claimed in Claim 3, wherein the rotation of said electric motor is transmitted to the guide roller through a train of gears.

Fig. 1

Fig. 2

Fig. 3

Fig. 4    PRIOR ART

0051858

0051858

Fig. 5   PRIOR ART

0051858

*Fig. 6*

Fig. 7